# EUROPEAN PATENT APPLICATION

(11) **EP 1 467 600 A1**
(43) Date of publication of application: **13.10.2004**
(21) Application number: 02790786.4
(22) Date of filing: 16.12.2002
(51) Int. Cl.: H05B 33/14, H05B 33/10, C09K 11/08, C09K 11/00

(54) **ELECTROLUMINESCENCE ELEMENT AND PRODUCTION METHOD THEREFOR**

(30) Priority: 17.12.2001 JP 2001382554; 17.12.2001 JP 2001382555
(71) Applicant: Uezawa, Toshikazu, Takarazuka-shi, Hyogo 665-0842 (JP); Tseng, Peter, N. Area, 404 Taichung (TW)
(72) Inventor: TSENG, Peter, N. Area, 404 Taichung (TW)
(74) Representative: Leson, Thomas Johannes Alois, Dipl.-Ing.
(86) International application number: PCT/JP2002/013143
(87) International publication number: WO 2003/055274

(57) **Abstract**

A phosphor 5 is structured with fluorescent particles 11, a coating film 12 which coats the fluorescent particles 11, and an insulation film 13 which further coats the coating film 12. The fluorescent particles 11 are formed by pulverizing a composite consisting of a fluorescent compound such as zinc sulfide (ZnS) and an auxiliary component such as manganese (Mn) added thereto. The coating film 12 consists of e.g. copper (Cu), and has a thickness of e.g. 2-20 nm to enhance the conductivity of electrons in the fluorescent particles 11. The insulation film 13 consists of e.g. high-permittivity organic polymer and has a thickness of e.g. 100 nm to increase the permittivity of the surface of the phosphor 5.

## Description

### Technical Field

The present invention relates to an electroluminescence element for improving its characteristics such as life and luminous efficacy, and production method therefor.

### Background Art

As an electroluminescence element (hereinafter referred to as EL element) which emits light when an electric voltage is applied thereto, so far, an EL element laminated with a transparent conductive layer, a luminous layer including a plurality of fluorescent particles, an insulating layer, and a back electrode is well known.

However, the above conventional EL element suffers from a disadvantage of difficulty in extending its life because of a quality deterioration of the fluorescent particles influenced by environmental factors such as temperature changes and oxidization. Furthermore, there is a problem that it is not possible to realize an EL element of high luminance because electrons emitted by the applied voltage do not interact effectively with the fluorescent particles.

The present invention has been achieved in order to solve the above-mentioned problems. It is a main object of this invention to provide an EL element and its production method for realizing long life and high luminance.

### Disclosure of the Invention

For achieving the above-mentioned object, according to the present invention, an EL element laminated with a transparent conductive layer, a luminous layer including a plurality of fluorescent particles, an insulation layer, and a back electrode, is characterized in that each surface of the plurality of fluorescent particles is coated with a protection film.

Such an arrangement makes a protection film coat each surface of the plurality of fluorescent particles, thereby preventing the oxidization of the fluorescent particles so that the EL element of long life is produced.

According to the present invention, the EL element of claim 1 is further characterized in that the protection film is structured with a first layer which coats each of the plurality of fluorescent particles and consists of copper, and a second layer which further coats the first layer and consists of organic polymer.

Such an arrangement makes the protection film structure with a first layer which coats each of the plurality of fluorescent particles and consists of copper, and a second layer which further coats the first layer and consists of organic polymer. Therefore, the conductivity of electrons to the fluorescent particles is enhanced by the first layer, and the permittivity of the surface of the fluorescent particles is increased by the second layer. Thus, the EL element of high luminance is produced.

According to the present invention, the EL element of claim 2 is further characterized in that the protection film is formed through the following five steps: a first step of disposing the plurality of fluorescent particles in hydrochloric atmosphere at a temperature of about 800 °C for about 30 minutes; a second step, subsequent to the first step, of soaking the plurality of fluorescent particles in solution of cupric chloride for about 10 minutes; a third step, subsequent to the second step, of mixing the plurality of fluorescent particles which are through the second step with organic polymer of which the amount is 1-5 weight % of that of the plurality of fluorescent particles in the atmosphere at a temperature of 45-65 °C for about 30 minutes; a fourth step, subsequent to the third step, of disposing the plurality of fluorescent particles in vacuum atmosphere at a temperature of about 90 °C for about 48 hours, and a fifth step, subsequent to the fourth step, of heating the plurality of fluorescent particles which are through the fourth step for 20-120 minutes to form a coating film of copper which coats each of the plurality of fluorescent particles.

Such an arrangement permits the protection film to be formed suitably, the protection film being structured with a first layer which coats each of the plurality of fluorescent particles and consists of copper, and a second layer which further coats the first layer and consists of organic polymer.

According to the present invention, the EL element of any one of claims 1 to 3 is further characterized by comprising a dielectric layer which is formed between the transparent conductive layer and the luminous layer, and a condensed layer which is formed between the luminous layer and the insulation layer.

Such an arrangement provides the EL element with the dielectric layer formed between the transparent conductive layer and the luminous layer, and the condensed layer formed between the luminous layer and the insulation layer. Therefore, electrons are accelerated by the electric fields of the dielectric layer, the condensed layer and the insulation layer which are generated when an electric voltage is applied between the transparent conductive layer and the back electrode. As a result, excitation energy supplied to the fluorescent particles is increased, thereby producing the EL element of high luminous efficacy.

Further, according to the present invention, an EL element laminated with a transparent conductive layer, a luminous layer including a plurality of fluorescent particles, an insulation layer, and a back electrode, is characterized by comprising a dielectric layer which is formed between the transparent conductive layer and the luminous layer, and a condensed layer which is formed between the luminous layer and the insulation layer.

Such an arrangement provides the EL element with the dielectric layer formed between the transparent conductive layer and the luminous layer, and the condensed layer formed between the luminous layer and the insulation layer. Therefore, electrons are accelerated by the electric fields of the dielectric layer, the condensed layer and the insulation layer which are generated when an electric voltage is applied between the transparent conductive layer and the back electrode. As a result, excitation energy supplied to the fluorescent particles is increased, thereby producing the EL element of high luminous efficacy.

Further, according to the present invention, a method for producing an EL element laminated with a transparent conductive layer, a luminous layer including a plurality of fluorescent particles, an insulation layer, and a back electrode, is characterized in that each surface of the plurality of fluorescent particles is coated with a protection film which is formed through the following five steps: a first step of disposing the plurality of fluorescent particles in hydrochloric atmosphere at a temperature of about 800 °C for about 30 minutes; a second step, subsequent to the first step, of soaking the plurality of fluorescent particles in solution of cupric chloride for about 10 minutes; a third step, subsequent to the second step, of mixing the plurality of fluorescent particles which are through the second step with organic polymer of which the amount is 1-5 weight % of that of the plurality of fluorescent particles in the atmosphere at a temperature of 45-65 °C for about 30 minutes; a fourth step, subsequent to the third step, of disposing the plurality of fluorescent particles in vacuum atmosphere at a temperature of about 90 °C for about 48 hours, and a fifth step, subsequent to the fourth step, of heating the plurality of fluorescent particles which are through the fourth step for 20-120 minutes to form a coating film of copper which coats each of the plurality of fluorescent particles.

Such an arrangement permits the protection film to be formed suitably, the protection film being structured with a first layer which coats each of the plurality of fluorescent particles and consists of copper, and a second layer which further coats the first layer and consists of organic polymer.

Further, according to the present invention, a method for producing an EL element laminated with a transparent conductive layer, a luminous layer including a plurality of fluorescent particles, an insulation layer, and a back electrode, is characterized by forming a dielectric layer between the transparent conductive layer and the luminous layer, and by forming a condensed layer between the luminous layer and the insulation layer. The method is further characterized by comprising the steps of: (a) making a combination by adding the luminous layer to the dielectric layer, heating the combination up to any temperature of 320-500 °C while increasing the temperature at the rate of 3-10 °C per minute, maintaining the temperature for 30-90 minutes, and then air-cooling the combination while decreasing at the rate of 3-8 °C per minute, and (b) coating the combination with the condensed layer and the insulation layer, heating the coated combination to a temperature of about 500 °C while increasing the temperature at the rate of 3-10 °C per minute, maintaining the temperature for about 60 minutes, and then air-cooling the coated combination while decreasing at the rate of 3-8 °C per minute.

Such an arrangement makes the combination made by adding the luminous layer to the dielectric layer heat at the step (a), and then the combination coated with the condensed layer and the insulation layer heat at the step (b). This improves the state of the re crystallization of the luminous layer, hence the brightness and the luminous efficacy are enhanced.

### Brief Description of the Drawings

Fig.1 is a sectional view showing an EL element according to a first embodiment of the present invention;
Fig.2 is a sectional view showing a fluorescent particle of the EL element according to the first embodiment of the present invention;
Fig.3 is a flow chart showing the forming process of a coating film and an insulation film according to the first embodiment of the present invention;
Fig.4 is a sectional view showing the EL element according to a second embodiment of the present invention;
Fig.5 is a time chart showing a temperature changes of heating process of the EL element according to the second embodiment of the present invention; and
Fig.6 is a time chart showing the temperature changes of heating process of the EL element according to the second embodiment of the present invention.

### Best Modes for Carrying Out the Invention

### <First Embodiment>

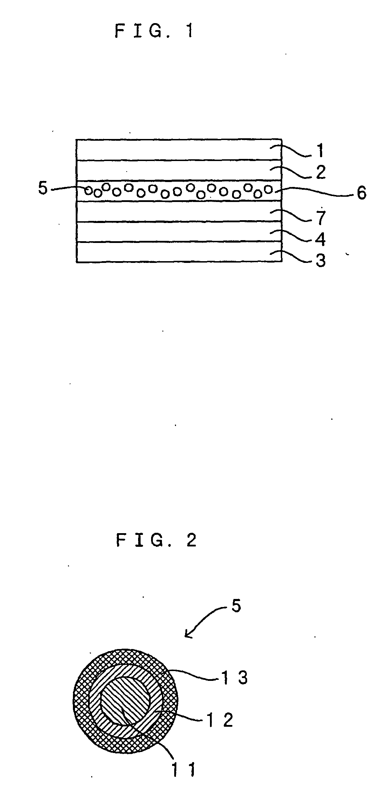

Now, referring to Figs. 1 and 2, a first embodiment of an EL element in the present invention will be described. Fig.1 is a sectional view of the first embodiment, and Fig.2 is a sectional view of a fluorescent particle.

As shown in Fig. 1, an EL element comprises a transparent conductive layer 2 formed in tight contact with a transparent protection film 1 on the surface; a back electrode 4 formed in tight contact with a back protection film 3; and a luminous layer 6 including phosphor 5 and an insulation layer 7 which are formed between the transparent conductive layer 2 and the back electrode 4. The phosphor 5 emits light toward the transparent protection film 1 when an electric voltage is applied between the transparent conductive layer 2 and the back electrode 4.

The transparent protection film 1 and the back protection film 3 are formed by a material such as polyethylene terephthalate (PET). In addition, not limited to PET, other plastic films or glass substrates are suitable for forming the transparent protection film 1 and the back protection film 3. The transparent conductive layer 2 is formed by a transparent conductive film such as indium tin oxide (ITO). The back electrode 4 is formed by a metallic film such as aluminum or a conductive film such as conductive carbon. The insulation layer 7 is formed by a synthetic resin including insulation particles, barium titanate is used as the insulation particles, and high-permittivity organic polymer is used as the synthetic resin, for example.

As shown in Fig. 2, the phosphor 5 comprises fluorescent particles 11, a coating film 12 which is a protection film for coating the fluorescent particles 11, and an insulation film 13 for further coating the coating film 12. The fluorescent particles 11 are formed by pulverizing a composite consisting of a fluorescent compound such as zinc sulfide (ZnS) and an appropriate auxiliary component added thereto according to the colors of light emitted, the auxiliary component being copper (Cu) for red and green light, manganese (Mn) for blue light, and both of copper and manganese for white light, for example. The coating film 12 consists of e.g. copper (Cu), has a thickness of e.g. 2-20 nm, and enhances the conductivity of electrons to the fluorescent particles 11. The insulation film 13 consists of e.g. a high-permittivity organic polymer, has a thickness of e.g. 100 nm, and increases the permittivity of the surface of the phosphor 5.

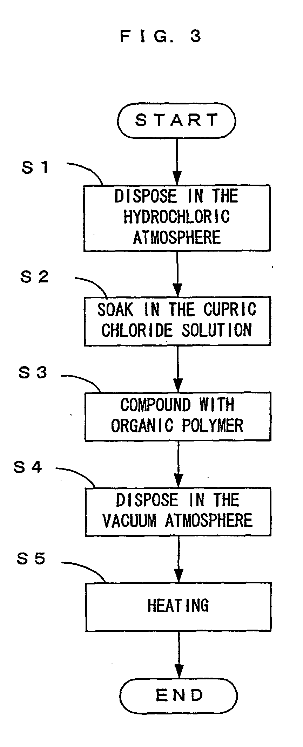

Next, referring to Fig. 3, the process for forming the coating film 12 and the insulation film 13 will be described. Fig. 3 is a flow chart showing the corresponding forming process.

First of all, as a first step, fluorescent particles 11 are disposed in the hydrochloric (HCl) atmosphere at a temperature of about 800 °C for about 30 minutes (S1). Next, as a second step, the fluorescent particles 11 are soaked in the cupric chloride (CuCl₂) solution for about 10 minutes (S2). Next, as a third step, the fluorescent particles 11 are compounded with organic polymer of which the amount is 1-5 weight % of that of the fluorescent particles 11 and into which Ti or Al is taken, in the atmosphere at a temperature of 45-65 °C for about 30 minutes (S3). Then, as a fourth step, the fluorescent particles 11 are disposed in vacuum atmosphere at a temperature of about 90 °C for about 48 hours (S4). Finally, as a fifth step, the fluorescent particles 11 are heated at a temperature of 450-650 °C for 20-120 minutes in order to form a metal film made of copper (S5).

Thus, according to the first embodiment, the fluorescent particles 11 are coated with the coating film 12 formed by Cu, so that the conductivity of electrons to the fluorescent particles 11 is enhanced. The enhancing of the conductivity makes it possible to produce the EL element of high luminance and large size.

Moreover, according to the first embodiment, the fluorescent particles 11 are coated with the insulation film 13 formed by organic polymer, which effectively prevents the fluorescent particles 11 from deteriorating in quality caused by the environmental factors such as temperature changes and oxidization. The prevention of the deterioration makes it possible to extend the life of the EL element. Further, because of coating the fluorescent particles 11 with the insulation film 13, the permittivity of the surface of the fluorescent particles 11 is increased, which makes it possible to produce the EL element of high luminance.

By contrast with the conventional EL element which has about 20 cd/m² of luminance, according to the first embodiment, the high-luminous EL element having 100 cd/m² of luminance is produced.

### <Second Embodiment>

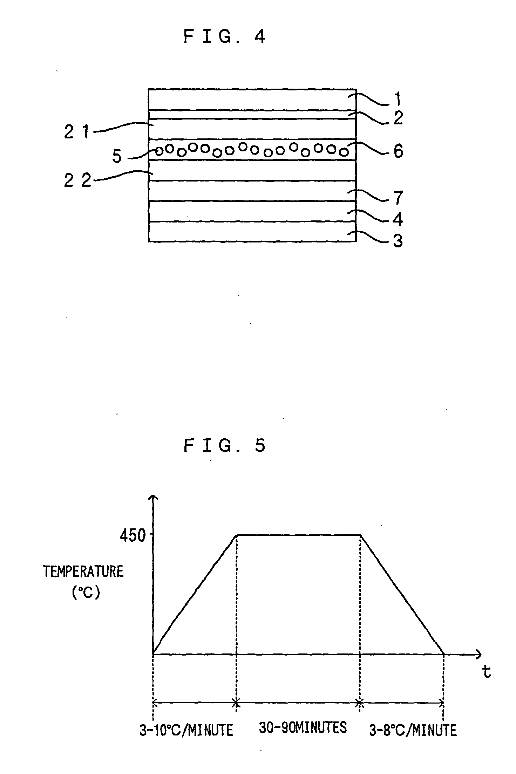

Next, referring to Fig. 4, a second embodiment of the EL element in the present invention will be described. Fig. 4 is a sectional view showing the construction of the second embodiment. In Fig. 4, the same parts as those in Fig. 1 are denoted at the same reference symbols.

As shown in Fig. 4, the EL element in the second embodiment is structured that the luminous layer 6 is sandwiched in between a dielectric layer 21 and a condensed layer 22.

According to this embodiment, a composite consisting of a strontium sulfide (SrS), praseodymium ion (Pr³⁺), and cerium ion (Ce³⁺) is used as the fluorescent particles 11 of the luminous layer 6, and the layer has a thickness of about 300 nm.

The dielectric layer 21 is formed by tantalum oxide (Ta₂O₅) and has a thickness of about 200 nm. The condensed layer 22 is formed by silicon dioxide (SiO₂) and has a thickness of about 270 nm. The insulation layer 7 is formed by barium titanate (BaTiO₃) and has a thickness of about 20 . m.

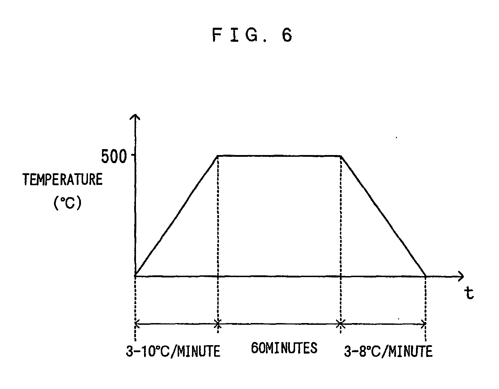

Next, referring to Figs. 5 and 6, a production process of an EL element according to the second embodiment will be described. Figs. 5 and 6 are time charts showing temperature change in the heating process respectively.

First, as shown in Fig. 5, a combination of the dielectric layer 21 and the luminous layer 6 is heated up to any temperature of 320-500 °C (450 °C in Fig. 5) while increasing the temperature at the rate of 3-10 °C per minute, then, kept in the same temperature for 30-90 minutes, after that, air-cooled (naturally cooled) while decreasing at the rate of 3-8 °C per minute. In this process, the most preferable condition is as follows: to be heated to a temperature of about 350 °C while increasing the temperature at the rate of 5 °C per minute, then, kept in the same temperature for 60 minutes, after that, air-cooled (naturally cooled) while decreasing at the rate of 4 °C per minute.

Next, the above-mentioned combination is coated with the condensed layer 22 and the insulation layer 7, then, as shown in Fig. 6, it is heated to a temperature of about 500 °C while increasing the temperature at the rate of 3-10 °C per minute, then, kept in the same temperature maintained for about 60 minutes, after that, air-cooled (naturally cooled) while decreasing at the rate of 3-8 °C per minute. The processes shown in Figs. 5 and 6 are carried out in the atmosphere of 6.5 Pa. In this process, the most preferable condition is as follows: to be heated to a temperature of 500 °C while increasing the temperature at the rate of 6 °C per minute, then, kept in the same temperature for 60 minutes, after that, air-cooled (naturally cooled) while decreasing at the rate of 6 °C per minute.

Furthermore, by adding the transparent protection film 1 having the transparent conductive layer 2, and the back protection film 3 having the back electrode 4, the EL element is formed.

In general, the life time and the luminance of an EL element depend on the interface between the luminous layer 6 and the insulation layer 7. According to the second embodiment, the luminous layer 6 is sandwiched in between the dielectric layer 21 and the condensed layer 22, so that the energy of electrons which reach the luminous layer 6 is increased. When the applied voltage is high, the relation of electron absorption to the applied voltage is far from the exponential relationship which the Franz-Keldysh effect abides. The average intensity of the electric field is higher than that of electric field for the ionization of impurities and the lattice defects. When the electrons are accelerated in the electric fields of the dielectric layer 21, the condensed layer 22 and the insulation layer 7, the electrons become hot electrons. These hot electrons interact with the lattice of the fluorescent particles 11 (ZnS in this embodiment). Accordingly, the vibration of the lattice is enhanced. The enhancement of the lattice vibration generates extra interface state density, which contributes to the increase of the number of the electrons available for excitation and tunnel effect. Due to the drop of the electric field across the interface, the electrons which tunnel through the interface gain high energy, thereby increasing the excitation efficiency and settling the problem of the absorption. In consequence, the luminous efficacy of the EL element described in the second embodiment is increased.

According to the construction shown in Fig. 4, and the heating process shown in Figs. 5 and 6, a white EL element having 120 cd/m² of luminance, x-coordinate=0.36 and y-coordinate=0.36 of the CIE chromaticity coordinates, and 0.6 lm/W of luminous efficacy is produced.

Thus, according to the second embodiment, the luminous layer 6 is sandwiched in between the dielectric layer 21 and the condensed layer 22, thereby producing an EL element of high luminance and excellent whiteness.

Further, according to the second embodiment, the EL element is produced through the heating processes as described referring to Figs. 5 and 6. This improves the state of the recrystallization of the luminous layer 6, which directly enhances the brightness and the luminous efficacy of the EL element.

It is to be understood that the present invention is not limited to the foregoing embodiments and various other changes and modifications may be made thereto within the scope of the present invention.

For example, the materials which constructs the transparent conductive layer 2, the back electrode 4, and the insulation layer 7 are not limited to the materials described in the above embodiments, and other known materials also can be used to construct them.

Moreover, in the above embodiments, the phosphor 5 which comprises fluorescent particles 11 on which the coating film 12 and the insulation film 13 are formed is used as the luminous layer 6, but the present invention is not limited to this. The luminous layer 6 may comprise the fluorescent particles 11 not coated with the coating film 12 nor the insulation film 13.

### Industrial Applicability

As described above, an EL element of the present invention is an EL element laminated with a transparent conductive layer 2, a luminous layer 6 including a plurality of fluorescent particles 11, an insulation layer 7, and a back electrode 4, wherein each surface of the fluorescent particles 11 is coated with a coating film 12. This prevents the oxidization of the fluorescent particles 11 and enables to produce the EL element of long life.

## Claims

1. An electroluminescence element laminated with a transparent conductive layer, a luminous layer including a plurality of fluorescent particles, an insulation layer, and a back electrode, wherein
each surface of said plurality of fluorescent particles is coated with a protection film.

2. The electroluminescence element according to claim 1, wherein
said protection film is structured with a first layer which coats each of said plurality of fluorescent particles and consists of copper, and a second layer which further coats said first layer and consists of organic polymer.

3. The electroluminescence element according to claim 2, wherein said protection film is formed through the following five steps:
a first step of disposing said plurality of fluorescent particles in hydrochloric atmosphere at a temperature of about 800 °C for about 30 minutes;
a second step, subsequent to said first step, of soaking said plurality of fluorescent particles in solution of cupric chloride for about 10 minutes;
a third step, subsequent to said second step, of mixing said plurality of fluorescent particles which are through said second step with organic polymer of which the amount is 1-5 weight % of that of said plurality of fluorescent particles in the atmosphere at a temperature of 45-65 °C for about 30 minutes;
a fourth step, subsequent to said third step, of disposing said plurality of fluorescent particles in vacuum atmosphere at a temperature of about 90 °C for about 48 hours, and
a fifth step, subsequent to said fourth step, of heating said plurality of fluorescent particles which are through said fourth step for 20-120 minutes to form a coating film of copper which coats each of said plurality of fluorescent particles.

4. The electroluminescence element according to any one of claims 1 to 3, further comprising:
a dielectric layer which is formed between said transparent conductive layer and said luminous layer, and
a condensed layer which is formed between said luminous layer and said insulation layer.

5. An electroluminescence element laminated with a transparent conductive layer, a luminous layer including a plurality of fluorescent particles, an insulation layer, and a back electrode, said element comprising:
a dielectric layer which is formed between said transparent conductive layer and said luminous layer, and
a condensed layer which is formed between said luminous layer and said insulation layer.

6. A method for producing an electroluminescence element laminated with a transparent conductive layer, a luminous layer including a plurality of fluorescent particles, an insulation layer, and a back electrode, wherein each surface of said plurality of fluorescent particles is coated with a protection film which is formed through the following five steps:
a first step of disposing said plurality of fluorescent particles in hydrochloric atmosphere at a temperature of about 800 °C for about 30 minutes;
a second step, subsequent to said first step, of soaking said plurality of fluorescent particles in solution of cupric chloride for about 10 minutes;
a third step, subsequent to said second step, of mixing said plurality of fluorescent particles which are through said second step with organic polymer of which the amount is 1-5 weight % of that of said plurality of fluorescent particles in the atmosphere at a temperature of 45-65 °C for about 30 minutes;
a fourth step, subsequent to said third step, of disposing said plurality of fluorescent particles in vacuum atmosphere at a temperature of about 90 °C for about 48 hours, and
a fifth step, subsequent to said fourth step, of heating said plurality of fluorescent particles which are through said fourth step for 20-120 minutes to form a coating film of copper which coats each of said plurality of fluorescent particles.

7. A method for producing an electroluminescence element laminated with a transparent conductive layer, a luminous layer including a plurality of fluorescent particles, an insulation layer, and a back electrode,
said method being for forming a dielectric layer between said transparent conductive layer and said luminous layer, and for forming a condensed layer between said luminous layer and said insulation layer, and
said method comprising the steps of:
(a) making a combination by adding said luminous layer to said dielectric layer, heating said combination up to any temperature of 320-500 °C while increasing the temperature at the rate of 3-10 °C per minute, maintaining the temperature for 30-90 minutes, and then air-cooling said combination while decreasing at the rate of 3-8 °C per minute, and
(b) coating said combination with said condensed layer and said insulation layer, heating said coated combination to a temperature of about 500 °C while increasing the temperature at the rate of 3-10 °C per minute, maintaining the temperature for about 60 minutes, and then air-cooling said coated combination while decreasing at the rate of 3-8 °C per minute.
